# EUROPEAN PATENT APPLICATION

(11) **EP 4 641 027 A1**
(43) Date of publication of application: **29.10.2025**
(21) Application number: 23909407.1
(22) Date of filing: 26.09.2023
(51) Int. Cl.: F04D 29/70, F04D 29/46, F04D 29/66, F02C 3/08, F04D 29/28

(54) **POWER DEVICE AND CENTRIFUGAL FAN THEREOF**

(30) Priority: 25.12.2022 CN 202223463779 U; 28.07.2023 CN 202310937385
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121423
(87) International publication number: WO 2024/139472

(57) **Abstract**

The present invention relates to the technical field of aircraft, and discloses an aircraft and its centrifugal fan. The centrifugal fan of the present invention comprises a plurality of airflow ducts circumferentially arranged around the rotational axis of the centrifugal fan. Each airflow duct is provided with a damper that opens under the thrust of an airflow when air flows outward through the duct and automatically closes when the airflow ceases. The centrifugal fan of the present invention addresses the protection issue at the outlets of aircraft centrifugal fans, reduces the impact of wind resistance, improves the reliability of the power unit, and achieves a higher protection level.

## Description

### FIELD OF THE DISCLOSURE

The present invention relates to the field of aircraft technology, in particular to a power unit and its centrifugal fan.

### BACKGROUND OF THE INVENTION

Traditional centrifugal fans often use protective mesh structures. If the mesh count is too small, although the protection level is high, the airflow passage capability is poor, and the high wind resistance causes additional losses, significantly affecting the heat dissipation of the power unit. A larger mesh count can reduce wind resistance losses but also lowers the protection level, increasing the risk of foreign objects entering the device during level flight or when parked, potentially damaging the power system.

### SUMMARY OF THE INVENTION

The purpose of the present invention is to provide a power unit and its centrifugal fan. The centrifugal fan of the present invention addresses the protection issue at the outlets of aircraft centrifugal fans, reduces the impact of wind resistance, improves the reliability of the power unit, and achieves a higher protection level.

To solve the above technical problems, the present invention provides a centrifugal fan, comprising: a plurality of airflow ducts circumferentially arranged around the rotational axis of the centrifugal fan, wherein each airflow duct is provided with a damper, the damper opens under the thrust of an airflow when air flows outward through the airflow duct and automatically closes when the airflow ceases.

The present invention further provides a power unit, comprising the above-described centrifugal fan. The centrifugal fan is connected to a rotating shaft of the power unit via bolts.

Preferably, the damper comprises a rotating shaft, and the damper is configured to rotate around the rotating shaft, a spring is sleeved on the rotating shaft, and a restoring force of the spring causes the damper to automatically close when no airflow passes through the airflow duct.

Preferably, the centrifugal fan further comprises an upper panel, a lower panel, and a plurality of circumferentially arranged partition plates between the upper panel and the lower panel, wherein any two adjacent partition plates, together with the upper panel and the lower panel, form an airflow duct.

Preferably, the upper panel and the lower panel extend transversely to the rotational axis of the centrifugal fan.

Preferably, the partition plates extend in a curved manner between the upper panel and the lower panel.

Preferably, when the damper is closed, an end of the damper away from the rotating shaft abuts against a partition plate.

Preferably, the centrifugal fan comprises a fan body and a fan sleeve, the fan body comprises a plurality of main ducts circumferentially arranged around the rotational axis of the centrifugal fan, the fan sleeve comprises a plurality of extension ducts circumferentially arranged around the rotational axis of the centrifugal fan, the fan sleeve is configured to be sleeved onto the fan body so that the extension ducts and the main ducts are connected one-to-one to form the airflow ducts.

Preferably, the fan body and the fan sleeve have a plurality of notches and protruding parts, respectively, arranged at opposite edges, the protruding parts correspond one-to-one with the notches for connection.

Preferably, the protruding parts are provided with through holes, and the notches are provided with mounting holes, when the fan sleeve is sleeved onto the fan body, the through holes align with the mounting holes.

The centrifugal fan of the present invention addresses the protection issue at the outlets of aircraft centrifugal fans, reduces the impact of wind resistance, improves the reliability of the power unit, and achieves a higher protection level.

### BRIEF DESCRIPTION OF DRAWINGS

FIG. 1 is a structural diagram of the centrifugal fan of a power unit according to an embodiment of the present invention;
FIG. 2 is an exploded structural diagram of the fan body and of the fan sleeve according to an embodiment of the present invention;
FIG. 3 is a structural diagram of the power unit and of the fan body according to an embodiment of the present invention;
FIG. 4 is a structural diagram of the fan sleeve according to an embodiment of the present invention.

### DETAILED DESCRIPTION

The technical solutions of the invention will be clearly and completely described below in conjunction with the accompanying drawings. Apparently, the described embodiments are part of the embodiments of the invention, but not all of them. Based on the embodiments of the present invention, all other embodiments obtained by persons of ordinary skill in the art without making creative efforts belong to the scope of protection of the present invention.

Unless the context requires otherwise, throughout the specification and claims, the word "comprise" and variations such as "include" and "have" should be construed in an open, inclusive sense, i.e. should be interpreted as "including, but not limited to".

The following will be combined with the accompanying drawings to describe the various embodiments of the present invention in detail, so as to more clearly understand the purpose, characteristics and advantages of the present invention. It should be understood that the embodiments shown in the accompanying drawings are not intended to limit the scope of the present invention, but are only intended to illustrate the essential spirit of the technical solution of the present invention.

References throughout the specification to "one embodiment" or "an embodiment" mean that a particular feature, structure, or characteristic described in connection with the embodiment is included in at least one embodiment. Thus, the appearance of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a", "an", and "the" include plural referents unless the context clearly dictates otherwise. It should be noted that the term "or" is generally employed in its sense including "and/or" unless the context clearly dictates otherwise.

In the following description, in order to clearly demonstrate the structure and working mode of the utility model, many directional words will be used for description, but the words "front", "back", "left", "right", "outside", "inside", "outward", "inward", "up", "down", etc. should be understood as convenient terms and should not be understood as restrictive terms.

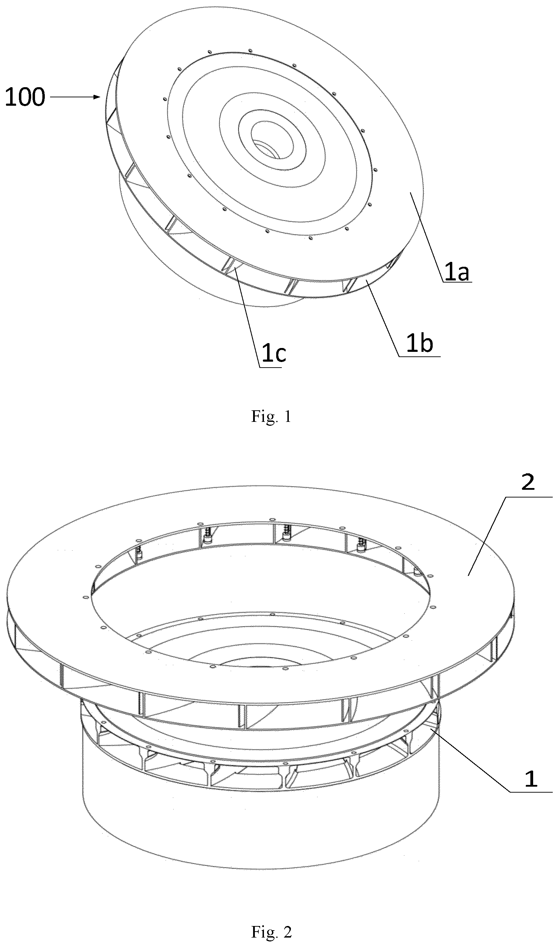

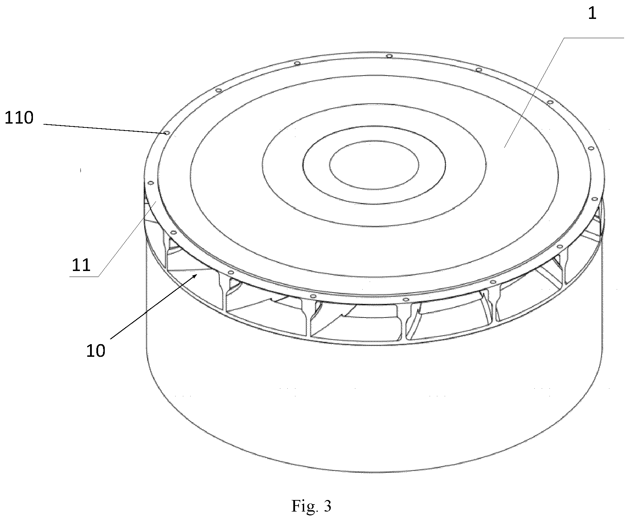

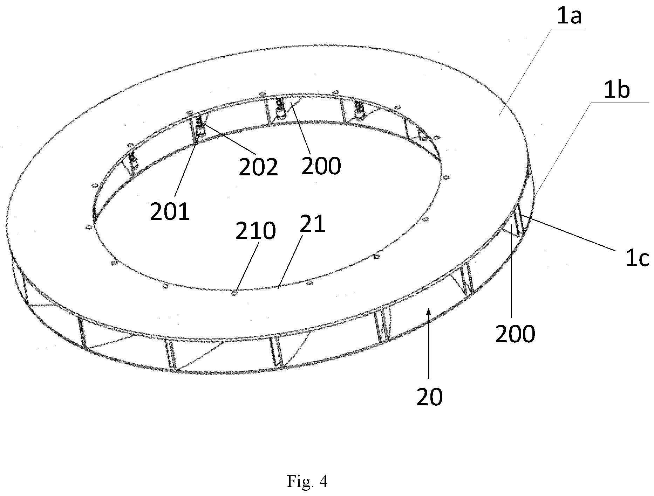

The embodiments of the present invention are described below with reference to the accompanying drawings. As shown in Figures 1 to 4, the centrifugal fan of this embodiment comprises: an upper panel 1a, a lower panel 1b, and a plurality of circumferentially arranged partition plates 1c between the upper panel 1a and the lower panel 1b. The upper panel 1a and the lower panel 1b extend transversely to the rotational axis of the centrifugal fan, and the partition plates 1c extend in in a curved manner between the upper panel 1a and the lower panel 1b. Any two adjacent partition plates 1c, together with the upper panel 1a and the lower panel 1b, form an airflow duct 100. The upper panel 1a, the lower panel 1b, and the plurality of partition plates 1c form a plurality of airflow ducts 100 circumferentially arranged around the rotational axis of the centrifugal fan. Each airflow duct is provided with a damper 200, which opens under the thrust of the airflow when air flows outward through the duct 100 and automatically closes when the airflow ceases. Specifically, the damper 200 comprises a rotating shaft 201, and the damper 200 can rotate around the rotating shaft 201. A spring 202 is sleeved on the rotating shaft 201, and the spring's restoring force causes the damper 200 to automatically close when no airflow passes through the airflow duct 100. In this embodiment, the spring 202 has a wire diameter of 0.4 mm, 8 coils, 120-degree pins, and a pitch of 1 mm. When the damper 200 is closed, the end of the damper 200 away from the rotating shaft 201 abuts against the partition plate 1c, stopping further rotation. The centrifugal fan of this embodiment addresses the protection issue at the outlets of aircraft centrifugal fans, reduces the impact of wind resistance, improves the reliability of the power unit, and achieves a higher protection level.

In some embodiments, the centrifugal fan comprises a fan body 1 and a fan sleeve 2. The fan body 1 comprises a plurality of main ducts 10 circumferentially arranged around the rotational axis of the centrifugal fan. The fan sleeve 2 comprises a plurality of extension ducts 20 circumferentially arranged around the rotational axis of the centrifugal fan. The fan sleeve 2 is sleeved onto the fan body 1 so that the extension ducts 20 and the main ducts 10 are connected one-to-one to form the airflow ducts 100. In this embodiment, the fan sleeve 2 comprises an upper panel 1a, a lower panel 1b, and a plurality of circumferentially arranged partition plates 1c between the upper and lower panels. Any two adjacent partition plates 1c, together with the upper panel 1a and the lower panel 1b, form the extension ducts 20. Each extension duct 20 is provided with a damper 200 and a rotating shaft 201. The damper 200 can rotate around the rotating shaft 201, and a spring 202 is sleeved on the rotating shaft 201. The spring's restoring force keeps the damper 200 closed when no airflow passes through the extension duct 20. The damper 200 opens under the thrust of the airflow when air flows through the extension duct 20. Preferably, the main ducts 10 and the extension ducts 20 are connected in a curved manner to enhance pressurization and acceleration effects. The fan blades have an airfoil design, which pressurizes and accelerates the airflow, improving the aerodynamic profile. After passing through the airfoil-designed fan blades-analogous to the airfoil design of drone wings-the wind speed and pressure are increased, thereby improving heat dissipation efficiency.

Further, the fan body 1 and the fan sleeve 2 have a plurality of notches 11 and protruding parts 21, respectively, arranged at opposite edges. The protruding parts 21 fit precisely into the notches 11, providing positioning for the installation of the fan sleeve 2. Additionally, the protruding parts 21 are provided with through holes 210, and the notches 11 are provided with mounting holes 110. When the fan sleeve 2 is sleeved onto the fan body 1, the through holes 210 align with the mounting holes 110, allowing the protruding parts 21 to be connected to the fan body 1 via bolts. Due to the limited installation space in the body of the aircraft, it is impossible to increase the size of the power unit to enlarge the centrifugal fan. Without changing the power unit diameter, the method of installing a fan sleeve on the fan body is adopted to lengthen the airflow ducts of the centrifugal fan, increase the outer linear speed of the centrifugal fan, and expand the heat dissipation area for airflow, thereby improving heat dissipation efficiency while ensuring simple installation and replacement.

When installing the power unit, the power unit can first be installed into the aircraft arm, leaving the fan body exposed outside the arm. The fan sleeve is then sleeved onto the fan body, placing the entire centrifugal fan above the arm. This not only improves heat dissipation efficiency but also ensures convenient installation and maintenance. However, it should be understood that the protruding parts 21 can be an inner ring connected to the upper panel 1a or a plurality of protruding structures arranged at intervals and extending from the upper panel 1a toward its inner center.

The second embodiment of the present invention provides a power unit, comprising the centrifugal fan described above. The centrifugal fan is connected to the rotating shaft of the power unit via bolts. The centrifugal fan of the present invention addresses the protection issue at the outlets of aircraft centrifugal fans, reduces the impact of wind resistance, improves the reliability of the power unit, and achieves a higher protection level.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. A centrifugal fan, comprising: a plurality of airflow ducts (100) circumferentially arranged around a rotational axis of the centrifugal fan, wherein each airflow duct (100) is provided with a damper (200), the damper (200) opens under a thrust of an airflow when air flows outward through the airflow duct (100) and automatically closes when the airflow ceases.

2. The centrifugal fan according to claim 1, wherein the damper (200) comprises a rotating shaft (201), and the damper (200) is configured to rotate around the rotating shaft (201), a spring (202) is sleeved on the rotating shaft (201), and a restoring force of the spring causes the damper (200) to automatically close when no airflow passes through the airflow duct (100).

3. The centrifugal fan according to claim 1, further comprising an upper panel (1a), a lower panel (1b), and a plurality of circumferentially arranged partition plates (1c) between the upper panel (1a) and the lower panel (1b), wherein any two adjacent partition plates (1c), together with the upper panel (1a) and the lower panel (1b), form an airflow duct (100).

4. The centrifugal fan according to claim 3, wherein the upper panel (1a) and the lower panel (1b) extend transversely to the rotational axis of the centrifugal fan.

5. The centrifugal fan according to claim 3, wherein the partition plates (1c) extend in a curved manner between the upper panel (1a) and the lower panel (1b).

6. The centrifugal fan according to claim 3, wherein, when the damper (200) is closed, an end of the damper (200) away from the rotating shaft (201) abuts against a partition plate (1c).

7. The centrifugal fan according to claim 1, wherein the centrifugal fan comprises a fan body (1) and a fan sleeve (2), the fan body (1) comprises a plurality of main ducts (10) circumferentially arranged around the rotational axis of the centrifugal fan, the fan sleeve (2) comprises a plurality of extension ducts (20) circumferentially arranged around the rotational axis of the centrifugal fan, the fan sleeve (2) is configured to be sleeved onto the fan body (1) so that the extension ducts (20) and the main ducts (10) are connected one-to-one to form the airflow ducts (100).

8. The centrifugal fan according to claim 1, wherein the fan body (1) and the fan sleeve (2) have a plurality of notches (11) and protruding parts (21), respectively, arranged at opposite edges, the protruding parts (21) correspond one-to-one with the notches (11) for connection.

9. The centrifugal fan according to claim 8, wherein the protruding parts (21) are provided with through holes (210), and the notches (11) are provided with mounting holes (110), when the fan sleeve (2) is sleeved onto the fan body (1), the through holes (210) align with the mounting holes (110).

10. A power unit, comprising the centrifugal fan according to any one of claims 1 to 9, wherein the centrifugal fan is connected to a rotating shaft of the power unit via bolts.
